**Europäisches Patentamt**

**European Patent Office**

**Office européen des brevets**

(11) Veröffentlichungsnummer: **0 445 430 A2**

# EUROPÄISCHE PATENTANMELDUNG

(21) Anmeldenummer: 90125443.3

(22) Anmeldetag: 24.12.90

(51) Int. Cl.5: **B60R 16/02**

(30) Priorität: **01.03.90 DE 4006323**

(43) Veröffentlichungstag der Anmeldung:
**11.09.91 Patentblatt 91/37**

(84) Benannte Vertragsstaaten:
**AT CH DE FR IT LI**

(71) Anmelder: **Blaupunkt-Werke GmbH**
**Robert-Bosch-Strasse 200**
**W-3200 Hildesheim(DE)**

(72) Erfinder: **Krome, Gerald**
**Wellenbach 11**
**W-3200 Hildesheim(DE)**

(74) Vertreter: **Eilers, Norbert, Dipl.-Phys.**
**Blaupunkt-Werke GmbH, Patente und**
**Lizenzen, Robert-Bosch-Strasse 200**
**W-3200 Hildesheim(DE)**

(54) **Netzteil für die Stromversorgung einer Steuerschaltung in einem Tonbandgerät.**

(57) Da bei bestimmten Tonbandgeräten, die für einen Betrieb in Kraftfahrzeugen vorgesehen sind, nach Abschaltung vom Zündungsplus noch Funktionen, wie Abheben der Gummiandruckrollen vom Tonband, zu steuern und zu überwachen sind, ist es erforderlich, das die Spannung für einen Mikroprozessor erzeugende Netzteil an Dauerplus anzuschließen.

Um einen unnötigen Stromfluß aus der Autobatterie zu vermeiden, sind Maßnahmen vorgesehen, die bewirken, daß der Mikroprozessor nach Abschluß seiner Aktivitäten sein Netzteil vom Dauerplus abschaltet.

Fig. 1

Die Erfindung betrifft ein Netzteil für die Stromversorgung einer elektronischen Steuerschaltung eines für den Betrieb in einem Kraftfahrzeug vorgesehenen Tonbandgerätes nach dem Oberbegriff des Patentanspruchs 1.

Ein derartiges Netzteil hat die Aufgabe, aus der 12-V-Bordnetzspannung des Kraftfahrzeuges eine stabilisierte Gleichspannung von beispielsweise 5 V für eine einen Mikroprozessor aufweisende Steuerschaltung zu erzeugen. Da bei Laufwerken bestimmter Tonbandgeräte nach dem Abschalten vom Zündungsplus mittels Zündschlüssel noch das Abheben der Gummiandruckrollen vom Tonband zu steuern und zu überwachen ist, ist es erforderlich, das Netzteil an Dauerplus anzuschließen. Um einen unnötigen Stromfluß aus der Autobatterie zu vermeiden, ist das Netzteil mit Schaltmitteln zu versehen, über die es vom Mikroprozessor nach Abschluß seiner Aktivitäten vom Dauerplus abschaltbar ist.

Derartige bekannte Netzteile, welche beispielsweise eine Zenerdiode, vier Transistoren und neun Widerstände aufweisen, sind jedoch relativ aufwendig.

Der Erfindung liegt die Aufgabe zugrunde, ein Netzteil zu schaffen, welches die gestellten Forderungen mit einem geringeren Aufwand an Bauteilen erfüllt.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß das Netzteil zum einen nur ein Minimum an Bauteilen erforderlich macht und zum anderen einen sehr geringen Einbauplatz benötigt.

Durch die in dem Unteranspruch 2 angeführten Maßnahmen ist eine besonders vorteilhafte Ausgestaltung des Netzteils möglich.

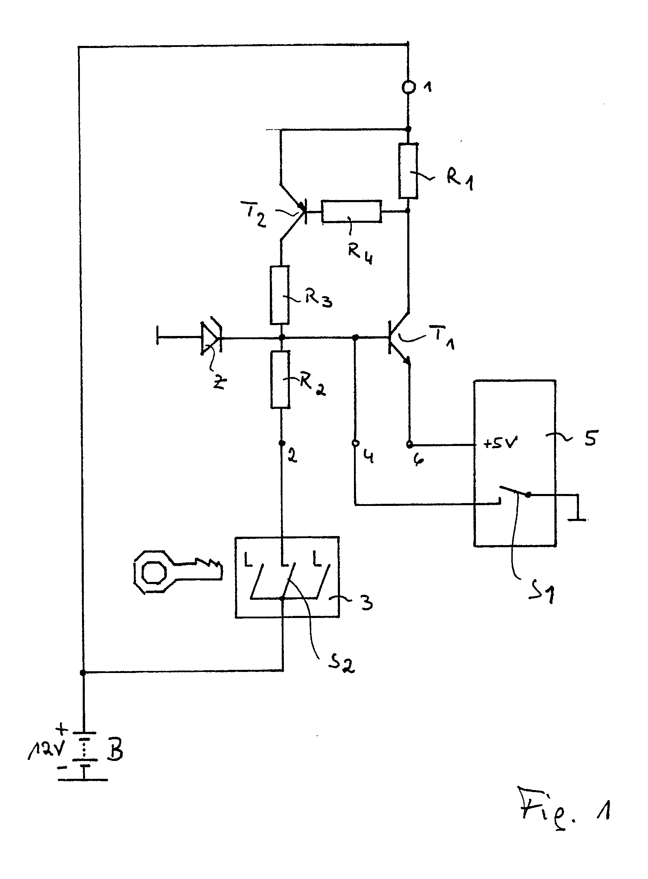

Ein Ausführungsbeispiel der Erfindung ist in der Zeichnung dargestellt und wird im folgenden näher beschrieben.

Ein erster Transistor T1 vom NPN-Leitertyp ist über einen ersten Widerstand R1 mit einer am Pluspol (Dauerplus) einer Autobatterie B liegenden ersten Eingangsklemme 1 verbunden. Die Basis des ersten Transistors T1 ist über einen zweiten Widerstand R2 mit einer weiteren Eingangsklemme 2 verbunden, die über das Zündschloß 3 des Kraftfahrzeuges mit dem Pluspol der Batterie B bzw. des Kraftfahrzeugbordnetzes verbindbar ist. Die über eine Zenerdiode Z an Masse liegende Basis des ersten Transistors T1 ist über einen dritten Widerstand R3 mit dem Kollektor eines zweiten Transistors T2 vom PNP-Leitertyp verbunden, dessen Emitter mit der ersten Eingangsklemme 1 und dessen Basis über einen vierten Widerstand R4 mit dem Kollektor des ersten Transistors T1 verbunden ist. Die Basis des ersten Transistors T1 ist über eine Anschlußklemme 4 für den Abschalteingang mit einem in einer nicht näher dargestellten elektronischen Steuerschaltung 5 vorgesehenen Schalter S1 verbunden, mit dem die Anschlußklemme 4 auf Massepotential schaltbar ist. Der Emitter des ersten Transistors T1 ist mit einer Ausgangsklemme 6 verbunden, welche eine der Zenerdiode Z entsprechende stabilisierte Speisespannung von beispielsweise 5 V für die Stromversorgung der einen Mikroprozessor aufweisenden elektronischen Steuerschaltung 5 entnehmbar ist.

Das Einschalten des Netzteils erfolgt durch die Betätigung des Zündschlosses 3, wobei ein insbesondere für den Betrieb eines Autoradios vorgesehener Kontakt S2 des Zündschlosses 3 geschlossen wird.

Der dabei über die Eingangsklemme 2, den zweiten Widerstand R2, die Basis-Emitter-Strecke des ersten Transistors T1 und die Ausgangsklemme 6 fließende Strom macht den Transistor T1 leitend, wobei der dann über die Eingangsklemme 1, den ersten Widerstand R1, die Kollektor-Emitter-Strecke des ersten Transistors T1, die Ausgangsklemme 6 und dem Mikroprozessor fließende Strom am ersten Widerstand R1 einen Spannungsabfall erzeugt. Diese am ersten Widerstand R1 abfallende Spannung steuert den zweiten Transistor T2 in den leitenden Zustand.

Wird nun die Eingangsklemme 2 durch Abschaltung des Zündschlosses 3 und der damit verbundenen Öffnung des Kontaktes S2 von der Plusklemme der Batterie B getrennt, so wird die Zehnerspannung an der Basis des ersten Transistors T1 über die Emitter-Kollektor-Strecke des zweiten Transistors T2 und den dritten Widerstand R3 aufrechterhalten. Das Netzteil arbeitet somit nach dem Abschalten vom Zündungsplus in Selbsthaltung. Erst nachdem die Laufwerkfunktionen, wie Abheben der Gummiandruckrollen vom Tonband usw. abgeschlossen sind, wird die Basis des ersten Transistors T1 über den Schalter S1 der Steuerschaltung 5 kurzzeitig an Masse gelegt, wodurch der Stromfluß durch den ersten Widerstand R1 unterbrochen und damit das Netzteil abgeschaltet wird.

**Patentansprüche**

1.  Netzteil für die Stromversorgung einer elektronischen Steuerschaltung eines für den Betrieb in einem Kraftfahrzeug vorgesehenen Tonbandgerätes, wobei das Netzteil einen als Spannungsstabilisator geschalteten ersten Transistor aufweist, dessem Kollektor über einen ersten Widerstand die zu stabilisierende Gleichspannung zugeführt wird, dessem über eine Zenerdiode an Masse liegender Basis über einen zweiten Widerstand eine Gleichspannung zugeführt wird und dessen Emitter die stabilisierte Spannung für die Steuerschaltung entnehmbar ist,
dadurch gekennzeichnet,
daß eine mit dem einen Anschlußende des ersten Widerstandes (R1) verbundene Eingangsklemme (1) für die zu stabilisierende Spannung mit dem Emitter eines zweiten Transistors (T2) verbunden ist, dessen Kollektor über einen dritten Widerstand (R3) mit der Basis des ersten Transistors (T1) und dessen Basis über einen vierten Widerstand (R4) mit dem anderen Anschlußende des ersten Widerstandes (R1) verbunden ist, daß die Basis des ersten Transistors (T1) einerseits über den zweiten Widerstand (R2) mit einer weiteren Eingangsklemme (2) für eine über einen externen Schalter (S2) einschaltbare Gleichspannung verbunden ist und andererseits mit einer mit einem Schalter (S1) der elektronischen Steuerschaltung (5) des Tonbandgerätes an Masse legbaren Anschlußklemme (4) verbunden ist.

2. Netzteil nach Anspruch 1,
dadurch gekennzeichnet,
daß die erste Eingangsklemme (1) zum direkten Anschluß an die Plus-Klemme des Kraftfahrzeug-Bordnetzes (B) (Dauerplus), daß die weitere Eingangsklemme (2) zum Anschluß an das Zündschloß (3) (Zündungsplus) vorgesehen ist und daß die mit der Basis des ersten Transistors (T1) verbundene Anschlußklemme (4) mit einem Schalter (S1) der elektronischen Steuerschaltung (5) verbunden ist, der nach einem Abschalten des Gerätes mittels Zündschloß (3) das Netzteil durch kurzzeitiges an Masse legen der Anschlußklemme (4) abschaltet, wenn alle Steuervorgänge, die das Gerätelaufwerk in den Ruhezustand überführen, abgeschlossen sind.

Fig. 1